# EUROPÄISCHE PATENTSCHRIFT

(11) **EP 1 736 317 B1**
(45) Veröffentlichungstag und Bekanntmachung des Hinweises auf die Patenterteilung: **14.10.2009**
(21) Anmeldenummer: 06012578.8
(22) Anmeldetag: 20.06.2006
(51) Int. Cl.: B41J 2/175, F16K 31/08

(54) **Tintenkartusche**
Ink cartridge
Cartouche d'encre

(30) Priorität: 25.06.2005 DE 102005029588
(43) Veröffentlichungstag der Anmeldung: 27.12.2006
(73) Patentinhaber: Artech GmbH design + production in plastic, 44149 Dortmund (DE)
(72) Erfinder: Busch, Peter, 44869 Bochum (DE); Michele, Helmut, 44577 Castrop-Rauxel (DE)

(56) Entgegenhaltungen:
- EP-A- 0 238 829
- EP-A- 1 125 747
- GB-A- 2 203 386
- JP-A- 4 316 774
- JP-A- 2003 307 282
- US-A- 5 040 002

## Beschreibung

Die vorliegende Erfindung bezieht sich auf eine Tintenkartusche, die ein Gehäuse mit mindestens einem Tintenbehälter aufweist, welcher einen Tintenauslass hat, der sich nach aussen erstreckt und in dem ein Differenzdruckventil angebracht ist, welches eine Ventilöffnung und einen relativ dazu beweglichen Ventilkörper umfasst, der (bezogen auf die Tintenkammer) von aussen mit einer vorbestimmten Schliesskraft belastet dichtend auf der Ventilöffnung sitzt und (bei einer Druckdifferenz zwischen der Tintenkammer und der Ausgangsseite des Tintenauslasses) gegen die Schliesskraft nach aussen von der Ventilöffnung bewegbar ist.

Derartige Tintenkartuschen dienen als austauschbare Tintentanks zur Tintenversorgung von Tintenstrahl-Druckeinrichtungen. Im wesentlichen bestehen sie aus einem Gehäuse, welches zur mechanischen Fixierung in einer korrespondierenden Aufnahme eines Druckers ausgebildet ist und in dem als eigentlicher Tintenspeicher ein oder mehrere Tintenbehälter, die mit verschiedenen Tinten gefüllt sein können, untergebracht sind. Jeder Tintenbehälter hat einen Tintenauslass zur lösbaren Verbindung mit einem Tintenversorgungsanschluss des Druckers. Wenn im Betrieb die in dem Tintenbehälter enthaltene Tinte vom Drucker aufgebraucht worden ist, kann die leere Tintenkartusche einfach aus dem Drucker entnommen werden und durch eine volle Tintenkartusche ersetzt werden. Die leeren Tintenkartuschen werden entweder entsorgt oder zur erneuten Verwendung wieder mit Tinte befüllt.

Einfach aufgebaute, kleinere Tintenstrahldrucker erfordern Tintenkartuschen, bei denen die Tinte am Tintenauslass unter einem vorgegebenen negativen Druckniveau ansteht, das dem Unterdruck entspricht, welches der Druckkopf während des Betriebs am Tintenversorgungsanschluss des Druckers erzeugt. Das negative Druckniveau muss in engen Grenzen eingehalten werden: Einerseits muss gewährleistet sein, dass die Tinte nicht bereits durch die Schwerkraft selbsttätig ausläuft und die Funktion des Druckkopfes stört, andererseits darf das Druckniveau nicht so hoch sein, dass von dem Druckkopf keine Tinte mehr abgesaugt werden kann.

Um die Tinte unter negativem Druck in der Tintenkartusche zurück zu halten, ist es bekannt, im Tintenauslass ein Differenzdruck-Ventil anzuordnen. Dieses öffnet, wenn der Druckkopf arbeitet und Tinte ansaugt, wodurch ein Unterdruck am Tintenversorgungsanschluss erzeugt wird. Dann öffnet das Differenzdruck-Ventil und Tinte kann zum Druckkopf fliessen.

Tintenkartuschen mit Differenzdruck-Ventilen im Tintenauslass sind in vielfältigen Ausführungen bekannt, beispielsweise aus der EP 238 829 B1. Darin wird ein Ventil mit einer elastischen Ventilkörper beschrieben, der den Tintenauslass-Kanal aussenseitig abdichtet und diesen freigibt, wenn durch den Druckkopf ein vorbestimmtes Unterdruck-Niveau am Tintenauslass unterschritten wird. Die Verwendung eines elastischen Ventilkörpers hat zwar den Vorteil eines einfachen Aufbaus. Nachteilig ist jedoch, dass die Herstellung eines elastischen Ventilkörpers mit der geforderten Genauigkeit der elastischen Eigenschaften in grossen Stückzahlen relativ aufwendig ist. Ausserdem verändern sich die Eigenschaften von elastischen Werkstoffen mit der Zeit, so dass das Ventil undicht wird oder die zum Öffnen erforderliche Druckdifferenz zu hoch oder zu niedrig wird.

Teilweise können die vorgenannten Probleme dadurch ausgeglichen werden, dass der Ventilkörper mit einem Federelement belastet wird. Ein derartiges Konzept ist beispielsweise in der EP 1 125 747 A2 beschrieben. Die Verwendung einer Metallfeder (wie in Fig.8 gezeigt) hat zwar den Vorteil einer verbesserten Langzeitstabilität. Allerdings sind Federn mit der erforderlichen Präzision aufwendig in der Herstellung und entsprechend kostspielig. Ausserdem ist die Montage der Federn aufwendig.

US 504 000 2 A zeigt eine Tintenkartusche gemäss dem Oberteil des Anspruchs 1.

Angesichts der vorangehend erläuterten Problem im Stand der Technik liegt der Erfindung die Motivation zugrunde, eine Tintenkartusche mit einem Differenzdruck-Ventil zu schaffen, welches langzeitstabil, präzise, einfach herstellbar und montierbar ist.

Zur Lösung der vorgenannten Problematik wird erfindungsgemäss vorgeschlagen, dass ein erster Permanentmagnet an dem Ventilkörper angebracht ist und ein zweiter Permanentmagnet relativ zur Ventilöffnung fest an der Tintenkartusche angebracht ist, der dem ersten Permanentmagnet gleichpolig gegenüber liegt, so dass die abstossende Kraft zwischen dem ersten und zweiten Permanentmagneten als Schliesskraft auf den Ventilkörper wirkt.

Bei der Erfindung wird die Ventilkraft, mit welcher der Ventilkörper gegen die Ventilöffnung angedrückt wird, nicht wie im Stand der Technik durch die elastischen Eigenschaften des Ventilkörpers oder ein zusätzliches mechanisches Federelement erzeugt, sondern durch magnetische Abstossung. Erfindungsgemäss die abstossende Kraft dadurch realisiert, dass ein erste und zweite Magnetelemente am beweglichen Ventilkörper und am relativ zur Ventilöffnung feststehenden Widerlager angebracht sind. Die Magnetelemente stehen sich mit gleichen Magnetpolen gegenüber, also Nord-Nord oder Süd-Süd, wodurch eine magnetische Kraft wirkt, die bezüglich einer Verbindungslinie der beiden Magente nach aussen gerichtet ist, mit anderen Worten die Magnete auseinander drückt. In der erfindungsgemässen Anordnung wird folglich der bewegliche Ventilkörper mit dem daran angebrachten ersten Magneten durch das abstossende magnetische Feld des zweiten Magneten, der an einem festen Widerlager an der Tintenkartusche angebracht ist, dichtend gegen die Ventilöffnung angedrückt.

Besonderere Vorteile der Erfindung ergeben sich daraus, dass die Übertragung der Schliesskraft auf den Ventilkörper berührungsfrei erfolgt. Dadurch ist es nämlich möglich, den Ventilkörper mit dem ersten Magneten und das Gehäuse mit dem zweiten Magneten zunächst einzeln herzustellen und anschliessend ohne mechanische Verbindung und damit besonders einfach zum Differenzdruck-Ventil zusammen zu montieren. Darüber hinaus fallen auch weitere potentielle mechanische Probleme weg, die aus der Verwendung von konventionellen Federn entstehen könnten, beispielsweise Reibung, Verkanten, Verunreinigungen etc..

Ein weiterer Vorteil ist, dass Permanentmagnete sich in hohen Stückzahlen mit engen Toleranzen hinsichtlich ihrer magnetischen und mechanischen Eigenschaften günstig produzieren lassen, beispielsweise durch Sinterverfahren. Dadurch kann das Ansprechverhalten des erfindungsgemässen Differenzdruck-Ventils entsprechend genau vorgegeben werden. Weiterhin ist es für die Ansprech-Charakteristik des Ventils besonders vorteilhaft, dass die abstossende Magnetkraft zwischen den beiden Permanentmagneten genutzt wird. Beim Öffnen des Ventils wird nämlich der Abstand zwischen den Magneten verkleinert, wobei die auf den Ventilkörper wirkende Magnetkraft progressiv ansteigt. Dadurch ist sicher gestellt, dass das Ventil einerseits beim Erreichen des vorgegebenen Differenzdrucks sicher öffnet und andererseits auch wieder schliesst, sobald die Druckdifferenz abfällt. Diese sichere Funktion wäre kritisch, wenn der Ventilkörper durch anziehende Magnetkraft im Ventilsitz gehalten würde, weil durch die dann mit zunehmendem Abstand progressiv abfallende Magnetkraft zum Öffnen eine relativ relativ hohe Haltekraft des Ventilkörpers überwunden werden müsste und die zum Schliessen erforderliche Rückstellkraft auf den Ventilkörper geringer ist. Dadurch würde eine derartige Anordnung für die vorliegende Anwendung eine ungünstigere Ansprechcharakteristik haben.
Eine weitere günstige Eigenschaft der erfindungsgemässen Nutzung der abstossenden Magnetkraft ist, dass Toleranzen im Abstand zwischen den Permanentmagneten lediglich einen geringen Einfluss auf die wirksame abstossende Magnetkraft haben. Im Gegensatz dazu wäre die Nutzung von anziehender Magnetkraft durch die starke Abstandsabhängigkeit der Magnetkraft bei den erforderlichen geringen Abständen ebenfalls ungünstiger.

Durch die Verwendung von Permanentmagneten aus hartmagnetischen Werkstoffen mit hoher Remanenz und Permeabilität können Magnete mit kleinen Abmessungen Verwendung finden, die über lange Zeit ihre Magnetisierung behalten. Entsprechend bleibt die Schliesskraft konstant und die Funktion des Ventils ist auch langfristig gewährleistet.

Vorzugsweise sind die Polachsen der Permanentmagnete koaxial ausgerichtet. Dadurch stehen sich die ersten und zweiten Permanentmagnete mit gleichen Magnetpolen bezüglich der Verbindungslinie axial gegenüber, wobei die radiale Orientierung ohne Einfluss ist. Dadurch wird die Fertigung vereinfacht und es wirken keine unerwünschten Drehmomente auf die Magnete.

Es ist vorteilhaft, dass die Permanentmagnete scheibenförmig ausgebildet sind. Für die magnetischen Eigenschaften ist es günstig, dass die Magnete als zylindrische Scheiben geformt sind mit axialer Magnetisierungsrichtung. Diese werden am Ventilkörper und einem festen Widerlager im Gehäuse der Tintenkartusche einfach axial übereinander angeordnet. Alternativ können die Permanentmagnete quader- oder ringförmig - oder auch in unterschiedlichen Abmessungen - ausgestaltet sein, um eine Optimierung der Schliesskraft zu erreichen oder eine Anpassung an das Gehäuse, beispielsweise zur Vereinfachung der Montage.

Eine vorteilhafte Ausführung der Erfindung sieht vor, dass der Ventilkörper und/oder der daran angebrachte erste Permanentmagnet auf einer Führung in Bewegungsrichtung geführt ist. Eine mechanische Führung des Ventilkörpers kann beispielsweise durch Führungsstangen oder -schienen und korrespondierende Öffnungen im Ventilkörper und im Gehäuse gebildet werden. Dadurch wird erreicht, dass der Ventilkörper sicher und exakt auf der Ventilöffnung aufsetzt.
Eine weitere Möglichkeit, den Ventilkörper relativ zur Ventilöffnung genau zu positionieren, besteht darin, dass der erste und zweite Permanentmagnet ein selbst zentrierendes Magnetlager bilden. Ein derartiges Magnetlager kann beispielsweise dadurch gebildet werden, dass einer der Permanentmagneten ein axial magnetisierter Ring ist, der den zweiten Magneten radial fixiert. Auf diese Weise kann eine berührungsfreie Zentrierung des Ventilkörpers relativ zur Ventilöffnung realisiert werden.

Die Permanentmagnete sind zweckmässiger weise mit Kunststoff ummantelt. Dadurch kommen die Magnete nicht in Kontakt mit der Tinte und sind somit zuverlässig gegen Korrosion geschützt. Bevorzugt ist der erste Magnet in den als Kunststoff-Spritzgussteil ausgebildeten Ventilkörper mit eingespritzt und der zweite Magnet in das ebenfalls aus Kunststoff bestehende Gehäuse der Tintenkartusche.
Die Tintenkartusche kann einen oder mehrere Tintenbehälter aufweisen. Die Tintenbehälter können als Kammern innerhalb des Gehäuses ausgebildet sein oder als separate Beutel oder dergleichen, die in das Gehäuse eingesetzt werden. Jeder einzelne dieser Tintenbehälter kann mit einem erfindungsgemässen Differenzdruck-Ventil versehen sein.

Im Folgenden wird eine Ausführung der Erfindung anhand von Zeichnungen näher erläutert. Im einzelnen zeigen:
- Fig.1: eine Schnittansicht einer Tintenkartusche,
- Fig.2: eine Detailansicht des Ventils der Tintenkartusche nach Fig.1.

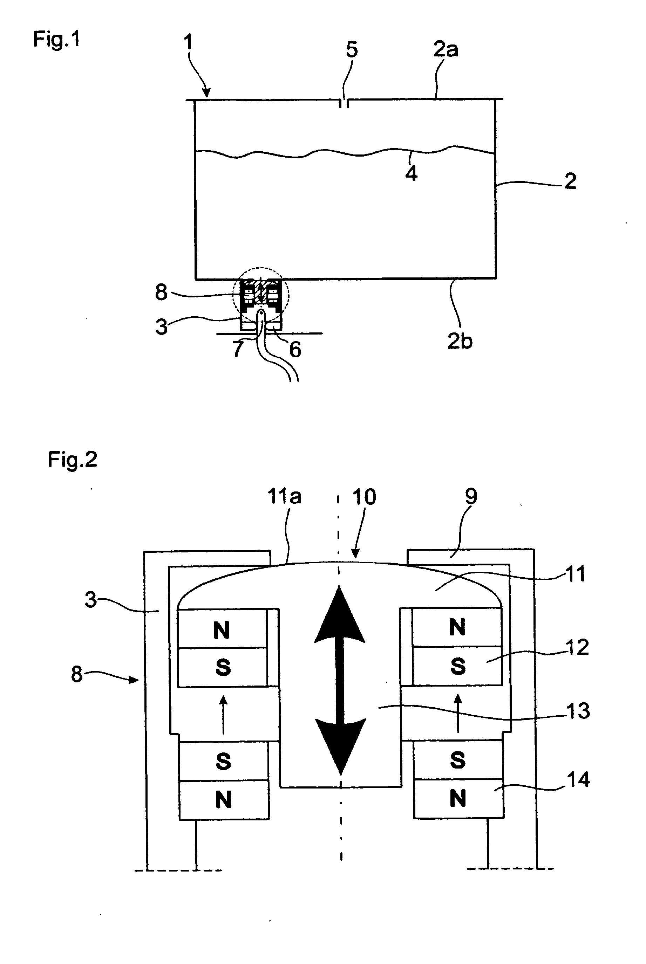

In Fig.1 ist eine Tintenkartusche schematisch im Schnitt dargestellt und als ganzes mit dem Bezugszeichen 1 versehen.

Die Tintenkartusche 1 weist ein im wesentlichen kastenförmiges Gehäuse 2 auf, welches oben mit einem Deckel 2a verschlossen ist. Vom Boden 2b des Gehäuses 2 erstreckt sich ein rohrförmiger Tintenauslass 3, welcher einen Durchgang vom Innenraum nach aussen bildet.

Die Tintenkartusche 1 ist bis zu dem als Wellenlinie eingezeichneten Füllstand 4 mit frei fliessender Tinte gefüllt.

Im Deckel 2a befindet sich eine Belüftungsöffnung 5, die den Tinten-gefüllten Innenraum des Gehäuses 2 mit der Umgebung verbindet und dafür sorgt, dass Umgebungsluft in das Gehäuse 2 nachströmt, wenn Tinte durch den Tintenauslass 3 entnommen wird.

Im Ausgang des Tintenauslasses 3 ist ein Dichtelement 6 eingesetzt, durch das eine hohle Tintenentnahmenadel 7 zur Tintenversorgung eines im einzelnen nicht dargestellten Tintenstrahldruckers in den Innenraum des Tintenauslasses 3 eingesetzt ist. Das Dichtelement 6 kann beispielsweise ein Dichtring oder ein durchstechbares Septum sein.

Im Durchgang des Tintenauslasses 3 ist ein Differenzdruckventil 8 angeordnet. Der gestrichelt eingezeichnete Bereich mit diesem Ventil 8 ist zur besseren Erläuterung in Fig.2 noch einmal vergrössert dargestellt.

Eingangsseitig, das ist in der Zeichnung oben, weist der Tintenauslass 3 einen Ventilsitz 9 mit einer Ventilöffnung 10 auf.

Auf der Ausgangsseite der Ventilöffnung 10 befindet sich ein Ventilkörper 11, der in dem Tintenauslass 3 längsverschieblich gelagert ist, was mit dem Doppelpfeil angedeutet ist. Eingangsseitig weist dieser Ventilkörper 11 eine Dichtfläche 11a auf, die in der gezeigten Ausführungsform ballig-konvex ausgebildet ist. Diese Linsenform gewährleistet eine ausreichende Abdichtung auch bei einer Verkippung relativ zum Ventilsitz 9. Durch die axiale Bewegbarkeit kann die Dichtfläche 11a wahlweise abdichtend gegen die Ventilöffnung 10 angedrückt werden oder zur Öffnung abgehoben werden. Ausgangsseitig ist an dem Ventilkörper 11 ein Permanentmagnet 12 befestigt, der als axial gepolter Ringmagnet ausgebildet ist. Die magnetische Polarisierung ist in der Zeichnung durch "S" (Südpol) und "N" (Nordpol) angedeutet. Weiterhin weist der Ventilkörper 11 ausgangsseitig einen axialen Führungszapfen 13 auf, der unter anderem den Ringmagnet 12 zentriert.

Koaxial zu dem Ringmagneten 12, der mit dem Ventilkörper 11 in dem Tintenauslass 8 axial beweglich gelagert ist, ist ein zweiter Ringmagnet 14 fest in dem Tintenauslass 8 angebracht. Dieser zweite Ringmagnet 14 ist ebenfalls ein axial polarisierter Permanentmagnet. Dadurch, dass er sich bezüglich des ersten Ringmagneten 12 ausgangsseitig befindet und dass seine Polarisierungsrichtung umgekehrt zu diesem ist , also die beiden Ringmagnete 12 und 14 mit gleichnamigen Magnetpolen (im dargestellten Beispiel "S") axial gegenüberstehen, wird durch die folglich abstossend wirkende Magnetkraft der Ringmagnet 12 und damit der Ventilkörper 11 mit seiner Dichtfläche 11a dichtend gegen die Ventilöffnung 10 angedrückt. Die dadurch erzeugte Schliesskraft, d.h. die abstossende Magnetkraft ist in der Zeichnung mit den aufwärts gerichteten Pfeilen zwischen den Ringmagneten 12 und 14 angedeutet.

Der Führungszapfen 13 ist so bemessen, dass er mit Spiel in der Durchgangsöffnung des fest stehenden Ringmagneten 14 axial geführt ist. Dadurch wird die Verkippung ders Ventilkörpers 11 relativ zum Ventilsitz 9 begrenzt. Der Durchmesser des Führungszapfens 13 wird so bemessen, dass genügend freier Durchgangsquerschnitt für den Durchfluss der Tinte durch den Tintenauslass 3 frei bleibt. Gegebenenfalls kann der Führungszapfen 13 dazu auch auf seinem Umfang mit Längsnuten oder
Rillen versehen sein.

Im Betrieb saugt der Drucker durch die Tintenentnahmenadel 7, die abgedichtet in das Dichtelement 6 im Ausgang des Tintenauslasses 3 eingesetzt ist, Tinte mit einem bestimmten Unterdruck an. Dadurch steht an dem Teil der Dichtfläche 11a, der durch den freien Querschnitt der Ventilöffnung 10 begrenzt wird, ein Differenzdruck zum Innenraum des Gehäuses 2 an und erzeugt damit eine (in der Zeichnung nach unten gerichtete) Kraft, die den Ventilkörper 11 von der Ventilöffnung 10 abhebt, so dass nunmehr Tinte durch das Differenzdruckventil 8 fliessen kann. Wenn kein Unterdruck mehr am Auslass anliegt, fällt auch die Druckdifferenz weg. Dann wird der Ventilkörper 11 durch die Schliesskraft, welche durch die einander abstossenden Ringmagnete 12 und 14 erzeugt wird, mit seiner Dichtfläche 11a dichtend gegen die Ventilöffnung 10 angedrückt.

Die wirkende Schliesskraft wird durch die Magnetisierung, Dimensionierung und Anordnung der Ringmagnete 12 und 14 so eingestellt, dass einerseits das Differenzdruckventil 8 dicht geschlossen ist, wenn bei einer vollen Kartusche von oben eine der Höhe des Gehäuses 2 entsprechende Flüssigkeitssäule ansteht, und andererseits das Differenzdruckventil 8 zuverlässig öffnet, wenn ein Drucker am Ausgang des Tintenauslasses 3 Tinte ansaugt.

## Patentansprüche

1. Tintenkartusche (1), die ein Gehäuse (2) mit mindestens einem Tintenbehälter aufweist, welcher einen Tintenauslass (3) hat, der sich nach aussen erstreckt und in dem ein Differenzdruckventil (8) angebracht ist, welches eine Ventilöffnung (10) und einen relativ dazu beweglichen Ventilkörper (11) umfasst, der bezogen auf dem Tintenbehälter von aussen mit einer vorbestimmten Schliesskraft belastet dichtend auf der Ventilöffnung (10) sitzt und gegen die Schliesskraft nach aussen von der Ventilöffnung bewegbar ist,
wobei ein erster Permanentmagnet (12) an dem Ventilkörper angebracht ist **gekennzeichnet dadurch, dass** ein zweiter Permanentmagnet (14) relativ zur Ventilöffnung fest an der Tintenkartusche angebracht ist, der dem ersten Permanentmagnet (12) gleichpolig gegenüber liegt, so dass die abstossende Kraft zwischen dem ersten und zweiten Permanentmagneten als Schliesskraft auf den Ventilkörper (11) wirkt.

2. Tintenkartusche nach Anspruch 1, **dadurch gekennzeichnet, dass** die Polachsen der Permanentmagnete koaxial ausgerichtet sind.

3. Tintenkartusche nach Anspruch 1, **dadurch gekennzeichnet, dass** die Permanentmagnete scheibenförmig ausgebildet sind.

4. Tintenkartusche nach Anspruch 1, **dadurch gekennzeichnet, dass** der Ventilkörper und/oder der daran angebrachte erste Permanentmagnet auf einer Führung in Bewegungsrichtung geführt ist.

5. Tintenkartusche nach Anspruch 1, **dadurch gekennzeichnet, dass** der erste und zweite Permanentmagnet ein selbst zentrierendes Magnetlager bilden.

6. Tintenkartusche nach Anspruch 1, **dadurch gekennzeichnet, dass** die Permanentmagnete mit Kunststoff ummantelt sind.

## Claims

1. Ink cartridge (1) which has a housing (2) with at least one ink container which has an ink outlet (3) which extends to the outside and in which a differential pressure valve (8) is attached which comprises a valve opening (10) and a valve body (11) which can be moved relative to the former, is seated sealingly on the valve opening (10), in a manner which is loaded with a predefined closing force from the outside in relation to the ink container, and can be moved from the valve opening to the outside counter to the closing force, a first permanent magnet (12) being attached to the valve body, **characterized in that** a second permanent magnet (14) is attached fixedly on the ink cartridge relative to the valve opening, which second permanent magnet (14) lies opposite the first permanent magnet (12) with the same pole, with the result that the repelling force between the first and second permanent magnets acts as a closing force on the valve body.

2. Ink cartridge according to Claim 1, **characterized in that** the pole axes of the permanent magnets are oriented coaxially.

3. Ink cartridge according to Claim 1, **characterized in that** the permanent magnets are of disc-shaped configuration.

4. Ink cartridge according to Claim 1, **characterized in that** the valve body and/or the first permanent magnet which is attached to it are/is guided on a guide in the movement direction.

5. Ink cartridge according to Claim 1, **characterized in that** the first and second permanent magnets form a self-centring magnetic bearing.

6. Ink cartridge according to Claim 1, **characterized in that** the permanent magnets are encapsulated with plastic.

## Revendications

1. Cartouche d'encre (1), qui comprend un boîtier (2) avec au moins un réservoir d'encre, qui présente une sortie d'encre (3) qui s'étend vers l'extérieur et dans laquelle est disposée une soupape à pression différentielle (8), qui présente une ouverture de soupape (10) et un corps de soupape (11) mobile par rapport à celle-ci, appliqué sur l'ouverture de soupape (10) de façon étanche en étant chargé de l'extérieur par une force de fermeture prédéterminée par rapport au réservoir d'encre, qui peut être déplacé de l'ouverture de soupape contre la force de fermeture agissant vers l'extérieur, dans laquelle un premier aimant permanent (12) est placé sur le corps de soupape, **caractérisée en ce qu'**un deuxième aimant permanent (14) est placé sur la cartouche d'encre de façon fixe par rapport à l'ouverture de soupape, lequel est installé avec le même pôle en face du premier aimant permanent (12), de telle manière que la force de répulsion entre le premier et le deuxième aimants permanents agisse comme force de fermeture sur le corps de soupape (11).

2. Cartouche d'encre selon la revendication 1,
**caractérisée en ce que** les axes des pôles des aimants permanents sont orientés de façon coaxiale.

3. Cartouche d'encre selon la revendication 1,
**caractérisée en ce que** les aimants permanents sont réalisés en forme de disques.

4. Cartouche d'encre selon la revendication 1,
**caractérisée en ce que** le corps de soupape et/ou le premier aimant permanent placé sur celui-ci est guidé sur un guidage dans la direction de déplacement.

5. Cartouche d'encre selon la revendication 1,
**caractérisée en ce que** le premier et le deuxième aimants permanents forment un palier magnétique à centrage automatique.

6. Cartouche d'encre selon la revendication 1,
**caractérisée en ce que** les aimants permanents sont enveloppés de matière plastique.
